# EUROPEAN PATENT APPLICATION

(11) **EP 1 632 829 A1**
(43) Date of publication of application: **08.03.2006**
(21) Application number: 04292127.0
(22) Date of filing: 03.09.2004
(51) Int. Cl.: G06F 1/00

(54) **Data integrity checking circuit**

(71) Applicant: Canal + Technologies, 75906 Paris Cedex 15 (FR)
(72) Inventor: Albanèse, Laurent, c/o Canal + Technologies, 75906 Paris cedex 15 (FR); Perrine, Jérome, c/o Canal + Technologies, 75906 Parix Cédex 15 (FR)
(74) Representative: Weihs, Bruno Konrad

(57) **Abstract**

A secured electronic device comprises a microprocessor (303) and a memory (302), the microprocessor allowing to read data from the memory and write data into the memory. Integrity checking means allow to perform an integrity check on data stored in the memory. The secured electronic device further comprises an integrity circuit that is connected to exchange data with the microprocessor and to exchange data with the memory such that the microprocessor reads and writes data from the memory through the integrity circuit, the integrity circuit comprising the integrity checking means.

## Description

### Background of Invention

### Field of the Invention

The invention relates generally to secured storage of data.

### Background Art

Secured storage of data is well known in various fields where access to data needs to be restricted for confidentiality or commercial reasons. Secured storage of data is for example essential in the field of digital pay television systems.

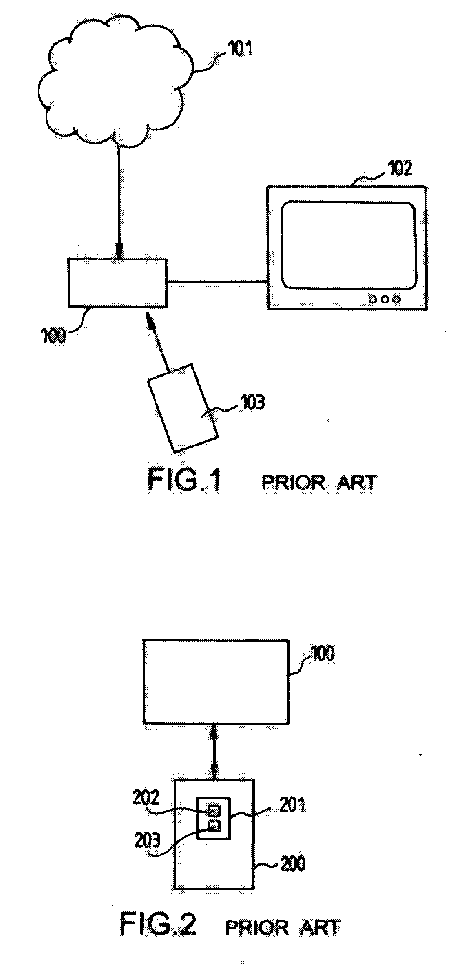

Fig. 1 shows an example of a digital television receiver set-up as used by a subscriber of digital television services. A decoder 100 receives digital television signals from a network 101 and processes the digital television signals for display on a television terminal 102. A remote control 103 allows the subscriber to control the decoder 100 to select services offered by the decoder such as for example the display of a particular audio-visual program broadcast among the digital television signals or an interactive user application run inside the decoder.

The digital television signals may be encrypted for commercial reasons in order to only allow an authorized subscriber that has paid a subscription fee to access audio-visual programs or any other content transmitted by means of the digital television signals. The authorized subscriber possesses information and hardware required to decrypt the digital television signals.

Fig. 2 illustrates an example of hardware that may be used to decrypt encrypted digital television signals. A smartcard 200 that carries a chip 201 is connected to an appropriate hardware interface (not shown in Fig. 2) of the decoder 100. This allows the decoder 100 to interact with the chip 201 by either sending data to or receiving data from the chip 201. The chip 201 generally comprises at least a microprocessor 202 and one or more types of memory 203 such as for example Random Access Memory (RAM), Read Only Memory (ROM), Electrical Erasable Programmable Read Only Memory (EEPROM) or flash memory. The memory allows to store data received from the decoder 100 or data written in the memory 103 during a configuration process at manufacturing or customization of the chip 201. The data may be written in the memory 203 using the microprocessor 202. The data stored in the memory 203 may for example be encryption and/or decryption keys, subscriber identification data, access rights... The data stored in the memory 203 may be stored without encryption in order to be used by anyone having access to the memory. In case the data stored in the memory 203 needs to be secured it may be encrypted using for example a decoder encryption key. In particular the data stored in the memory 203 may be used with the decoder to allow the decryption of the digital television signals and access determined services. Hence the smartcard 200 contains valuable information that the subscriber has acquired by paying his subscription and that allows to access services transmitted by means of the encrypted digital television signals.

It would be damaging for the operator of the digital television signals if the data stored on the smartcard 200 is copied or cloned in an illegal smartcard and used by non paying viewers. It would also be damaging if the data stored on the smartcard 200 is changed or modified in a manner that is not authorized by the operator of the digital television signals. Changes of the data stored on the smartcard could for example aim at illegally adjusting user rights, or replacing critical information...

It is well known in prior art to perform integrity checks on data stored in a memory. An integrity of data may only be preserved if changes to the data are made by persons having a right thereto. If a person without the proper right attempts to change the data, the integrity of the data is lost.

One way of doing an integrity check consists in computing a checksum over the data stored in the memory and storing the checksum for later use. The checksum can be used at any time to check that no change on the data stored in the memory occurred. This is done by computing a new checksum over the data stored in the memory and comparing the new checksum with the checksum. If the new checksum and the checksum are equal it is unlikely that the data stored in the memory was changed. If the new checksum differs from the checksum this indicates that the data stored in the memory was altered.

Other types of integrity checks are known in the art and will not be discussed here in more detail.

The integrity check is typically performed by a dedicated software routine that runs on a microprocessor. The microprocessor may be set to periodically or at intervals start the dedicated software routine.

In case an integrity check detects a lack of integrity, various measures may be implemented to protect the system that uses the data stored in the memory. The various measures include blocking a microprocessor, destroying the memory that stores the data, erasing the data, striking alarm, etc...

### Summary of Invention

In a first aspect the invention provides a secured electronic device that comprises a microprocessor and a memory, the microprocessor allowing to read data from the memory and write data into the memory. Integrity checking means allow to perform an integrity check on data stored in the memory. The secured electronic device further comprises an integrity circuit that is connected to exchange data with the microprocessor and to exchange data with the memory such that the microprocessor reads and writes data from the memory through the integrity circuit, the integrity circuit comprising the integrity checking means.

In a first preferred embodiment the integrity circuit further comprises a multiplexer and a cryptological block. The cryptological block allows to issue an instruction to the multiplexer for interrupting data exchange between the microprocessor and the memory, the multiplexer interrupting the data exchange on receipt of the instruction from the cryptological block, the cryptological block further allowing to perform the integrity check during the interrupted data exchange.

In a second preferred embodiment the cryptological block further allows to establish integrity parameters for data written into the memory by the microprocessor, and to use the integrity parameters for the integrity check.

In a third preferred embodiment the integrity circuit allows to perform the integrity check on a determined part of the memory.

In a second aspect the invention provides a smartcard comprising a secured electronic device.

Other aspects and advantages of the invention will be apparent from the following description and the appended claims.

### Brief Description of Drawings

Fig. 1 illustrates a television receiver set up according to prior art;

Fig. 2 illustrates a digital television decoder and a smartcard according to prior art;

Fig. 3 illustrates an example embodiment of an electronic device according to the invention.

### Detailed Description

In prior art the integrity check of data stored in memory is typically performed using software executed by a microprocessor. A person wanting to overrun the integrity check could possibly monitor the microprocessor's activity and reset the microprocessor at a moment where the integrity check is about to be executed as appropriate. As a consequence, changes made to the data stored in the memory are left undetected and may lead to a misuse.

The invention provides an integrity circuit that allows to perform an integrity check on data stored in an electronic device. The integrity check is performed independently of a microprocessor of the electronic device. The integrity check may occur at intervals that are unpredictable from the microprocessor. The integrity check may not be overrun because it cannot be stopped. If the integrity circuit finds that the integrity of data stored in the electronic device is lost, then the integrity circuit may trigger any type of countermeasure to prevent the misuse of data in the electronic device.

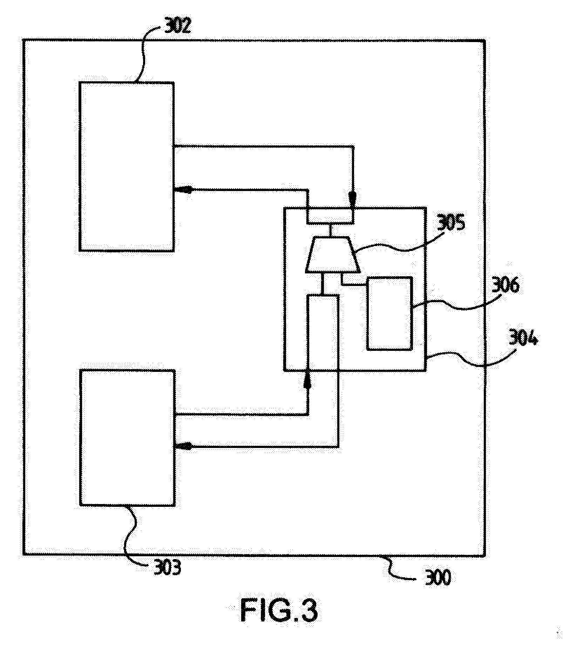

Fig. 3 illustrates an example embodiment of an integrity circuit configuration according to the invention. An electronic device 300 comprises a microprocessor 303 and a memory 302. The electronic device 300 may for example be a smartcard, and more precisely a chip embedded on a smartcard. The electronic device 300 may also be a printed circuit integrated in a mobile or non mobile device such as a cellular phone, an electronic key, a game computer, a computer...

Preferably the memory 302 is an EEPROM type memory. The EEPROM type memory allows to store data and keep data stored even if the EEPROM power supply is interrupted. The EEPROM in a digital pay television smartcard chip may be used for storing keys, periodically changing information, conditional access data, account information, electronic money etc...

The electronic device 300 further comprises an integrity circuit 304 that may exchange information for reading and for writing with either one of the microprocessor 303 or the memory 302. However, the microprocessor 303 must access the memory 302 through the integrity circuit 304. Most of the time, the integrity circuit 304 appears transparent between the microprocessor 303 and the memory 302, meaning that no intervention of the integrity circuit 304 can be perceived during communication between the microprocessor 303 and the memory 302.

The integrity circuit 304 may further comprise a cryptographical block 306 and a multiplexer 305. The cryptographical block 306 is connected to the multiplexer 305 and is programmed to occasionally send instructions to the mutliplexer 306 that cause an interruption of the communication between the microprocessor 303 and the memory 302. During the interruption the hardware block 306 proceeds with an integrity check of the data stored in the memory 302. The integrity check may be done according to any appropriate integrity checking algorithm known from prior art.

The integrity circuit 304 is entirely independent from the microprocessor 303. The microprocessor 303 has no means to control an instant or a method used by the integrity circuit 304 to do the integrity check. This improves the reliability of the integrity check in the electronic device 300 and renders the electronic device 300 more secure against unwanted manipulations from unauthorized persons.

Preferably the cryptographical block 306 may be used during writing of data by the microprocessor 303 in the memory 302 in order to establish integrity parameters. The integrity parameters relate to the data stored in the memory 302 and may be used during the integrity check to verify the integrity of the data. Hence if the data is changed in a manner other than using the microprocessor 303 and the cryptographical block 304, e.g., by copying data into the memory 302 from a third device connected to the memory 302 (not shown in Fig. 3), the integrity of the data stored in the memory 302 is lost and the illegal change of data may easily be detected during the integrity check.

In a preferred embodiment of the invention, the integrity circuit 304 performs the integrity check on a determined part of the memory 302 only. The determined part may be the entirety of the memory 302 or a restricted portion of the memory 302 only. Choosing a determined part of the memory to be checked may have a consequence on the time required to perform the integrity check. In addition, the determined part may be chosen to encompass only confidential or critical data stored in the memory 302 and leave remaining data unaffected from the integrity circuit 304.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A secured electronic device comprising
a microprocessor (303),
a memory (302), the microprocessor allowing to read data from the memory and write data into the memory,
Integrity checking means that allow to perform an integrity check on data stored in the memory,
the secured electronic device being **characterized in that** it further comprises
an integrity circuit (304) that is connected to exchange data with the microprocessor and to exchange data with the memory such that the microprocessor reads and writes data from the memory through the integrity circuit, the integrity circuit comprising the integrity checking means.

2. The secured electronic device of claim 1, wherein the integrity circuit further comprises
a multiplexer 305, and
a cryptological block 306,
the cryptological block allowing to issue an instruction to the multiplexer for interrupting data exchange between the microprocessor and the memory, the multiplexer interrupting the data exchange on receipt of the instruction from the cryptological block, the cryptological block further allowing to perform the integrity check during the interrupted data exchange.

3. The secured electronic device of claim 2, wherein the cryptological block further allows to establish integrity parameters for data written into the memory by the microprocessor, and to use the integrity parameters for the integrity check.

4. The secured electronic device of any one of claims 1 to 3, wherein the integrity circuit allows to perform the integrity check on a determined part of the memory.

5. A smartcard comprising a secured electronic device according to any one of claims 1 to 4.
